# EUROPÄISCHE PATENTSCHRIFT

(11) **EP 3 390 530 B1**
(45) Veröffentlichungstag und Bekanntmachung des Hinweises auf die Patenterteilung: **17.01.2024**
(21) Anmeldenummer: 16805290.0
(22) Anmeldetag: 01.12.2016
(51) Int. Cl.: C08L 23/12, C08L 23/14

(54) **THERMOPLASTISCHE ZUSAMMENSETZUNG**
THERMOPLASTIC COMPOSITION
COMPOSITION THERMOPLASTIQUE

(30) Priorität: 17.12.2015 DE 202015106875 U
(43) Veröffentlichungstag der Anmeldung: 24.10.2018
(73) Patentinhaber: REHAU Automotive SE & Co. KG, 95111 Rehau (DE)
(72) Erfinder: SEIFERT, Andreas, 95111 Rehau (DE); GOLLER, Rainer, 95213 Münchberg (DE); STEFFL, Udo, 95466 Weidenberg (DE)
(86) Internationale Anmeldenummer: PCT/EP2016/002024
(87) Internationale Veröffentlichungsnummer: WO 2017/102066

(56) Entgegenhaltungen:
- WO-A1-2011/041696
- WO-A1-2013/003541
- DE-U1-202012 102 438
- US-A1- 2015 259 453
- DOW: "Dow Elastomers for Automotive TPO Compounds", , 1. September 2013 (2013-09-01), XP002765945, Gefunden im Internet: URL:https://www.google.de/url?sa=t&rct=j&q =&esrc=s&source=web&cd=4&cad=rja&uact=8&ve d=0ahUKEwiziPHU3b7RAhXJXRoKHWSHCfIQFgg1MAM &url=http%3A%2F%2Fwww.dow.com%2Fscripts%2F litorder.asp%3Ffilepath%3Delastomers%2Fpdf s%2Fnoreg%2F777-00401.pdf&usg=AFQjCNHudEnR uwL65BSs2VF8Fpw-ILqxXQ&bvm=bv.144224172,d. d2s [gefunden am 2017-01-13]
- Anonymous: "INFUSE(TM) 9817 Olefin Block Copolymer | Dow Inc.", , 27 November 2020 (2020-11-27), XP055799512, Retrieved from the Internet: URL:https://www.dow.com/en-us/pdp.infuse-9 817-olefin-block-copolymer.124403z.html [retrieved on 2021-04-28]

## Beschreibung

Die Erfindung betrifft eine thermoplastische Zusammensetzung.

Weiterhin betrifft die Erfindung einen Artikel aus einer thermoplastischen Zusammensetzung.

Artikel aus einer thermoplastischen Zusammensetzung werden vielfältig eingesetzt. Ein wichtiges Gebiet ist der Automobilbau, bei dem insbesondere an der Oberfläche beschichtete bzw. be- oder verklebte Artikel zur Anwendung kommen.

Die Beschichtung bzw. Klebung von Artikeln ist eine sehr weit verbreitete Technik, die aus verschiedenen Gründen ausgeführt wird.

Die Artikel werden durch die Beschichtung gegen äußere Einflüsse geschützt, bewahren diese beispielsweise vor Korrosion oder der schädlichen Einwirkung von UV-Licht, erhöhen die Widerstandskraft der Oberfläche gegen mechanische Beschädigungen oder werden aus rein optischen Gründen vorgenommen, um das Aussehen des Artikels zu verbessern.

Insbesondere bei Artikeln, die als Automobilaußenanbauteile Verwendung finden, wird eine Beschichtung, meist in Form einer Lackbeschichtung, aus optischen Gründen und auch als Schutz gegen die Einwirkung von UV-Strahlen auf der Oberfläche aufgetragen.

Gerade Artikel für die Automobilindustrie, insbesondere Außenanbauteilen an der Karosse aus Kunststoff, wie beispielsweise Stoßfängerverkleidungen, Kotflügel, Tür- und Schwellerverkleidungen, Spoiler, Hecktür und Motorraum- sowie Kofferraumdeckelverkleidungen, Zierleisten und Relinge im Dachbereich, sowie Bauteile im Bereich der Frontscheibe, des Kühlers und die Tankklappe, werden in großem Umfang lackiert, um ein hochwertiges Aussehen zu erzeugen, das insbesondere optisch und farblich mit den lackierten Bauteilen aus Blech der Karosse übereinstimmt.

Bei derartigen Außenanbauteilen an Automobilkarosserien sind verschiedene Kunststoffarten im Einsatz.

Dabei sind Kunststoffe, die insbesondere eine hohe Polarität an der Oberfläche aufweisen, vergleichsweise einfach zu lackieren, in diesen Fällen wird eine sehr gute Lackhaftung des Lackmaterials auf der Oberfläche des Artikels erreicht.

Die häufig verwendeten, sehr unpolaren Kunststoffe, wie beispielsweise Polypropylen oder Polyethylen, verlangen dagegen entweder aufwändige Vorbehandlungen, damit eine Lackhaftung erreicht wird, oder aber es sind sehr aufwändige Lacksysteme erforderlich, um dies zu bewerkstelligen.

Die zurzeit vorliegenden technischen Lösungen dieses Problems, die insbesondere auf der Beflammung der Kunststoffoberfläche beruhen, stoßen hier im Hinblick auf die Sicherstellung einer sehr guten Lackhaftung immer mehr an ihre Grenzen.

Insbesondere die momentan von der Automobilindustrie geforderten Haftungseigenschaften, die in Verbindung mit Dampfstrahltests, Temperaturwechseltests und Wärme- / Kältelagerungen durchgeführt werden, erfordern eine deutlich verbesserte Haftung der Beschichtungen auf der Oberfläche der Artikel. Dies gilt auch für Klebungen auf der Oberfläche der Artikel.

Aufgabe der vorliegenden Erfindung ist es daher, eine thermoplastische Zusammensetzung anzugeben, die sich zu einem Artikel formen lässt und bei der im Zusammenhang mit der Beschichtung der Oberfläche des Artikels eine gegenüber dem Stand der Technik verbesserte Haftung der Beschichtung vorliegt.

Es ist auch eine Aufgabe der Erfindung, einen Artikel anzugeben, der eine verbesserte Haftung der Beschichtung oder Klebung auf der Oberfläche des Artikels aufweist.

Die erste Aufgabe wird durch die thermoplastische Zusammensetzung gemäß Anspruch 1 gelöst.

Abhängige Ansprüche beziehen sich auf vorteilhafte Ausführungsformen der Erfindung.

Es hat sich überraschender Weise gezeigt, dass eine thermoplastische Zusammensetzung, enthaltend mindestens ein Homopolymer des Polypropylens und mindestens eine Elastomerkomponente, die Aufgabe vollumfänglich löst, wenn vorgesehen ist, dass die Elastomerkomponente ausgewählt ist aus einem Polyolefin-1-alpha-Olefin-Copolymer auf Basis von Polyethylen oder von Polypropylen, mit zwei bis acht Kohlenstoffatomen im 1-alpha-Olefinteil, das zumindest teilweise eine Blockstruktur aufweist. wobei das Polyolefin-1-alpha-Olefin-Copolymer eine Dichte nach DIN ISO 53479 von 0,85 bis 0,91, und einen Schmelzindex nach DIN EN ISO 1133 von 0,2 bis 30 g/10min bei 2.16 kg / 190 °C aufweist,dadurch gekennzeichnet, dass das Polyolefin-1-alpha-Olefin-Copolymer in einer Menge von 5 bis 15 Gew.-% enthalten ist.

Mit dieser erfindungsgemäßen thermoplastischen Zusammensetzung können Artikel hergestellt werden, bei denen die Haftung des Beschichtungsmittels auf der Oberfläche gegenüber dem Stand der Technik signifikant verbessert ist.

Das Kohlenstoffgerüst des Polyolefin-1-alpha-Olefins-Copolymers auf Basis von Polyethylen oder von Polypropylen weist zwei bis acht Kohlenstoffatome im 1-alpha-Olefinteil auf. Diese können linear, ab drei Kohlenstoffatomen auch als verzweigte Kette oder in einem ggf. auch verzweigten Ringsystems angeordnet sein.

Bevorzugte Beispiele von Polyolefin-1-alpha-Olefin-Copolymeren sind die Copolymerisate von Ethylen und 1-Buten, 1-Hexen oder 1-Octen.

Die Comonomere können statistisch einpolymerisiert sein oder besonders bevorzugt auch eine Blockstruktur aufweisen.

Typische Lackhaftungsprüfungen wie der Dampfstrahltest werden bei erhöhten Wassertemperaturen ausgeführt, wie z. B. in der DIN 55662 beschrieben. Diese Norm legt ein Prüfverfahren zum Beurteilen der Beständigkeit von organischen Beschichtungen, insbesondere von Oberflächen aus dem Bereich der Automobilindustrie, gegen die Einwirkung eines Druckwasserstrahls fest. Das Prüfverfahren soll die Auswirkungen eines Druckwasserstrahls auf eine Beschichtung simulieren. Es wird der Grad der Enthaftung an einem Ritz unmittelbar nach der Belastung mit einem Druckwasserstrahl bewertet oder / und gemessen.

Teilweise kommen zur Simulation der Alterung des Substrates noch Temperaturwechselprüfungen im Vorfeld des Dampfstrahltests zum Einsatz. Hier werden verschiedene zyklische Belastungen von - 40 °C bis +105 °C durchgefahren, die für die Polymerstruktur und Morphologie des Substrates eine hohe Belastung durch partielles Erweichen darstellen.

Es hat sich überraschenderweise herausgestellt, dass durch den gezielten Aufbau und eine gezielte Morphologie der Kautschukphase in der erfindungsgemäßen Zusammensetzung die Auswirkungen des Dampfstahltests auf die Haftung der Beschichtung deutlich verbessert werden können.

Das Polyolefin-1-alpha-Olefin-Copolymer weist eine Dichte nach DIN ISO 53479 von 0,85 bis 0,91 g/cm3 auf und einen Schmelzindex nach DIN EN ISO 1133 von 0,2 bis 30 g/10min bei 2.16 kg / 190 °C

Das Polyolefin-1-alpha-Olefin-Copolymer mit dem genannten Schmelzindexbereich lässt in einfacher Weise durch Formgebungsprozesse zu dem gewünschten Artikel formen, der die signifikant verbesserte Haftung der Beschichtung auf der Oberfläche aufweist.

Im Rahmen der vorliegenden Erfindung hat es sich als sehr brauchbar erwiesen, wenn die thermoplastische Zusammensetzung ein Polyolefin-1-alpha-Olefin-Copolymer mit einem Schmelzpunkt nach DIN 53765 von 50 bis 130 °C, insbesondere von 80 bis 120 °C aufweist.

Bei einem Schmelzpunkt in dem genannten Temperaturbereich, insbesondere im Bereich zwischen 80 und 120 °C, kann eine Erweichung der Kautschukkomponente im Temperaturwechseltest vor dem Dampfstrahltest signifikant verzögert oder sogar verhindert werden. Die Haftung der polyurethanbasierten Beschichtungsstoffe zur amorphen Kautschukphase wird aufrechterhalten.

Ebenso hat sich als überaus praktikabel erwiesen, wenn im Rahmen der Weiterbildung der vorliegenden Erfindung vorgesehen ist, dass das Polyolefin-1-alpha-Olefin-Copolymer in der thermoplastische Zusammensetzung eine Mooney Viskosität nach ASTM D1646 von 2 bis 70 aufweist.

Ein Mooney Viskosität im genannten Bereich ist besonders vorteilhaft geeignet, um neben der guten Haftung zum Lack auch eine ausreichende Schlagzähigkeit zur Verfügung zu stellen.

In der thermoplastischen Zusammensetzung ist das Polyolefin-1-alpha-Olefin-Copolymer homogen verteilt.

An allen Stellen der thermoplastischen Zusammensetzung ist dabei die Konzentration des Polyolefin-1-alpha-Olefin-Copolymer gleich bzw. etwa gleich groß. Eine solche homogene Verteilung des Polyolefin-1-alpha-Olefin-Copolymers in der thermoplastischen Zusammensetzung kann durch intensives Vermischen des Polyolefin-1-alpha-Olefin-Copolymers mit dem Polyolefin erreicht werden.

Aus dieser thermoplastischen Zusammensetzung lassen sich durch Formgebungsverfahren Artikel herstellen. Solche Formgebungsverfahren können beispielsweise Spritzgussverfahren, Blasverfahren, Extrusionsverfahren, Thermoformverfahren und weitere sowie Kombinationen der vorgenannten umfassen.

Die thermoplastische Zusammensetzung dieser Erfindung enthält das Polyolefin-1-alpha-Olefin-Copolymer in einer Menge von 5 bis 15 Gew.-%

Damit kann ein breites Spektrum an erfindungsgemäßen thermoplastischen Zusammensetzungen bereitgestellt werden, das für Artikel in verschiedenen Anwendungsfeldern geeignet ist.

In einer Weiterbildung der Erfindung ist vorgesehen, dass die thermoplastische Zusammensetzung derart gebildet ist, dass das Polyolefin-1-alpha-Olefin-Copolymer abgemischt ist mit einem HDPE (High Density Polyethylen).

Eine solche Abmischung des Polyolefin-1-alpha-Olefin-Copolymers mit einem HDPE (High Density Polyethylen) kann vorteilhaft eingesetzt werden, um daraus mechanisch besonders widerstandsfähige Artikel herzustellen.

In der thermoplastische Zusammensetzung der vorliegenden Erfindung ist das Polyolefin in vorteilhafter Weise ausgewählt aus einem Homo- und / oder Copolymeren des Polypropylens, aus einer Mischung oder Mischzusammensetzung des Polypropylens mit einem weiteren mit diesem mischbaren Polymermaterial oder mit einem hochkristallinem Polypropylen mit einem Isotaktizitätsindex von > 80.

Die erfindungsgemäße thermoplastische Zusammensetzung kann in einer Fortbildung weitere Komponenten enthalten, ausgewählt aus Stabilisatoren, Gleitmitteln, Pigmenten, Füllstoffen, Nukleierungsmitteln, Antistatika, Haftungsverbesserer, Leitfähigkeitsadditiven, Schaumbildungsmitteln, Gasen, Impaktmodifikatoren und Oberflächenspannungsmodifikatoren.

Auf diese Weise kann die erfindungsgemäße thermoplastische Zusammensetzung genau an die Notwendigkeiten angepasst werden, die in der Anwendung gefordert sind.

Es hat sich weiterhin als praktikabel erwiesen, wenn vorgesehen ist, dass die thermoplastische Zusammensetzung einen Füllstoff enthält, der ausgewählt ist aus einem Standard-Talkum oder einem High Aspect Ratio Talkum mit einer BET Oberfläche von 8 bis 50 m2/g nach IS 9277.

Durch das Beigeben eines Füllstoffs in Form eines Standard-Talkums oder eines High Aspect Ratio Talkum mit einer BET Oberfläche von 8 bis 50 m2/g nach ISO 9277 können dichtereduzierte Polypropylenformulierungen aufgebaut werden, die dennoch eine hohe Steifigkeit aufweisen.

Thermoplastische Zusammensetzungen dieser Art sind besonders gut geeignet, daraus Artikel herzustellen, die Im Automobilbau Einsatz finden.

Die weitere Aufgabe der vorliegenden Erfindung, einen Artikel anzugeben, erfährt ihre Lösung in Anspruch 12.

Es wurde erkannt, dass aus der thermoplastischen Zusammensetzung gemäß Erfindung ein Artikel herstellbar ist, der eine solche thermoplastische Zusammensetzung enthält oder aus einer solchen besteht.

Ein solcher Artikel kann in Form eines Automobilbauteils, insbesondere eines Automobilau-ßenanbauteils, wie beispielsweise einer Stoßfängerverkleidung, eines Kühlergitters, eines Spoilers, einer Schwellerverkleidung, eines Kotflügels, einer Heckklappe, einer Tür, eines Deckels, eines Tankdeckels, einer Verschlussanordnung, einer Abdeckung, einer Leiste oder dergleichen vorliegen.

Erfindungsgemäß kann der Artikel zumindest abschnittsweise an seiner Oberfläche beschichtet, beklebt, lackiert oder anderweitig dekoriert oder funktionalisiert sein.

Bei der Qualitätsbeurteilung einer Lackierung, insbesondere von lackierten Außenanbauteilen an Karossen, werden Prüfungen auf Lackhaftung durchgeführt.

Die Prüfungen sind z.B. nach der Daimler Benz Vorschrift DBL 5416 oder nach der VW Vorschrift TL 211 durchzuführen.

Neben sogenannten "Gitterschnittprüfungen", bei denen die Lackschicht bis zur Thermoplastoberfläche oder bis in die Thermoplastoberfläche des Artikels kreuzweise eingeschnitten wird und dann die Lackhaftung mittels eines Klebebandauftrags und -abzugs ermittelt wird, gibt es noch sogenannte "Dampfstrahlprüfungen", bei denen ein Hochdruckwasserstrahl auf die Lackschicht gerichtet wird, wobei es - je nach der Haftung der Lackschicht auf der Oberfläche des Artikels - zu Enthaftungen / Deleaminationen kommt.

Diese Prüfungen können insbesondere auch nach einer Temperaturwechselprüfung mit zyklischer Belastung zwischen - 40 °C und + 105 °C durchgeführt werden.

Auch Klimawechseltests und Wärme- und Kältelagerungen können je nach den Anforderungen der Kunden oder den technischen Erfordernissen der Anwendung des Artikels vor der Prüfung der Haftung der Lackschicht auf der Oberfläche des Artikels notwendig sein.

### Ausführungsbeispiele der Erfindung

Zur Verdeutlichung der praktischen Umsetzung der vorliegenden Erfindung werden die folgenden Beispiele beschrieben, wobei Teile als Gewichtsteile zu verstehen sind.

Die Erfindung bezieht sich auf die folgenden Beispiele. Die Beispiele dienen nur zur Beschreibung und beschränken in keiner Weise die erfindungsgemäßen thermoplastischen Polymerzusammensetzungen.

### Rohstoffe für die erfindungsgemäße Zusammensetzung

A) Polyolefin
   A1) 60 Teile Polypropylen 1, z. B. BRASKEM C 711-70 RNA mit einer Dichte bei 23 °C von 0,88 - 0,92 g/cm3 nach ISO 1183 und einem Schmelzindex MFR nach ISO 1133 von 65 - 75 g/cm3 bei 230 °C / 2,16 kg und einem E- Modul von 1050 MPa
   A2) 10 Teile Polyolefin-1-alpha-Olefin-Copolymer, z. B. ENGAGE XLT 8677 mit einer Blockstruktur, und einem Schmelzpunkt von 118 °C nach DIN 53765
B) Füllstoffe
   B1) 30 Teile Talkum, z. B. STEAMIC OOS C A mit einer Schüttdichte von 0,8 - 1,2 kg/dm3 nach ISO 787/11 und einer Dichte von 2,78 g/cm3 nach ISO 787/10
C) weitere Komponenten
   C1) 0,3 Teile IRGANOX B 215 als Stabilisator.

### Rohstoffe der Verqleichsrezeptur (Stand der Technik)

A) Polyolefin
   A1) 60 Teile Polypropylen 1, z. B. BRASKEM C 711-70 RNA mit einer Dichte bei 23 °C von 0,88 - 0,92 g/cm3 nach ISO 1183 und einem Schmelzindex MFR nach ISO 1133 von 65 - 75 g/cm3 bei 230 °C / 2,16 kg und einem E- Modul von 1050 MPa
   A2) 10 Teile statistisches Polyolefin-1-alpha-Olefin-Copolymer, z. B. ENGAGE 8842 mit einem Schmelzpunkt 38°C nach DIN 53765.
B) Füllstoffe
   B1) 30 Teile Talkum, z. B. STEAMIC OOS C A mit einer Schüttdichte von 0,8 - 1,2 kg/dm3 nach ISO 787/11 und einer Dichte von 2,78 g/cm3 nach ISO 787/10
C) weitere Komponenten
   C1) 0,3 Teile IRGANOX B 215 als Stabilisator.

### Herstellung der thermoplastischen Polymerzusammensetzungen

### (Vergleichsexperimente 1 und 2 und erfindungsgemäße Beispiele 3 und 4)

Für alle Beispiele wurde das gleiche Herstellungsverfahren eingesetzt.

Die Polymere, die Füllstoffe und weitere Komponenten wurden in einem Extruder ZE 25 - 48d von Krauss Maffei Berstorff compoundiert. Die granulat- und die pulverförmigen Rohstoffe wurden (in Abhängigkeit der Beispiele) getrennt vorgemischt und mittels gravimetrischer Dosieranlagen von Brabender in den Haupteinzug bzw. über eine Seitenfütterung in den Maschinenzylinder dosiert. Im Extruder erfolgte die oben beschriebene Homogenisierung der Masse zur Ausbildung der erfindungsgemäßen Zusammensetzung bei erhöhter Temperatur unter Anwendung von Scherenergie.

### Beschichtungsmittel

Die Beschichtungsmittel können je nach Anwendung und gewünschtem Eigenschaftsprofil auf Basis von Lösemittel oder auf Basis von Wasser rezeptiert sein.

Die Beschichtungsmittel stehen in flüssiger Form zur Applikation bereit. Sie enthalten Bindemittel, Pigmente, Füllstoffe, Additive und Zuschlagstoffe.

Je nach Anwendung und gewünschtem Eigenschaftsprofil kann ein mehrschichtiger Beschichtungsaufbau gewählt werden.

Ohne sich auf diese zu beschränken, wird das erfindungsgemäße Prinzip an Hand eines Drei-Schichtaufbaus erläutert.

Ein Drei-Schichtaufbau setzt sich aus
- Grundierung,
- Basislack, und
- Klarlack
zusammen.

Je nach Anwendung und gewünschtem Eigenschaftsprofil zeigt die vorliegende Erfindung, dass die erfindungsgemäße thermoplastische Zusammensetzung eine verbesserte Haftung des Lackes auf der Oberfläche des daraus gebildeten Artikels aufweist, als vergleichbare Aufbauten aus Zusammensetzungen nach dem Stand der Technik.

### Lackmaterialien

1) Wörwag Haftprimer schiefergrau leitfähig
   erhalten von KARL WÖRWAG Lack- und Farbenfabrik GmbH & Co KG.
2) Wörwag Basislack Iridiumsilber DAG T4
   erhalten von KARL WÖRWAG Lack- und Farbenfabrik GmbH & Co KG.
3) Wörwag Hochglanzklarlack 11141
   erhalten von KARL WÖRWAG Lack- und Farbenfabrik GmbH & Co KG.

### Herstellung der Kunststoffoberflächen

### (Vergleichsbeispiele 1 und 2 und erfindungsgemäße Beispiele 3 und 4)

Für die Beispiele 1 und 2 wurde das gleiche Substrat aus Polypropylen, Füllstoff, Pigment, Stabilisierungsmittel, Verarbeitungshilfsmittel, Copolymer in einer tpyischen Zusammensetzung für zu lackierende Automobilaußenteile extrudiert und in Platten der Größe 20 cm * 5 cm * 0,3 cm spritzgegossen.

Für die Beispiele 3 und 4 wurde die erfindungsgemäße thermoplastische Zusammensetzung aus Polypropylen,

Füllstoff, Pigment, Stabilisierungsmittel, Verarbeitungshilfsmittel, Copolymer in einer typischen Zusammensetzung für zu lackierende Automobilaußenteile extrudiert und in Platten der Größe 20 cm * 5 cm * 0,3 cm spritzgegossen.

In Abhängigkeit der Beispiele wurden die hergestellten Platten beflammt bzw. einer Plasmabehandlung unterzogen und anschließend mit Beschichtungsmitteln versehen.

### Aktivierung

1. Gasflamme: Die Beflammung der Plättchen des Versuchs 1 erfolgte mittels Propan als Trägergas mit 240 I min⁻¹ Luft und 9.5 l min⁻¹ Propan und einem Brennerabstand von 90 mm von der Substratoberfläche.
2. Plasma: Die Plasmabehandlung wurde in einem Gerät PA 2000 der Fa. Plasma Technology bei 0,1 mbar unter Sauerstoffatmosphäre für 1 min. bei 3 kW durchgeführt.

Nach Aktivierung wurden die Plättchen in Abhängigkeit der Beispiele der vorliegenden Erfindung bzw. der Vergleichsbeispiele mit Primer, Basislack und Klarlack unter folgenden Bedingungen beschichtet:
Primer: Wörwag Haftprimer schiefergrau leitfähig, im Kreuzgang wurden mit der Pistole so gespritzt, dass die Schichtdicke von 12 µm erreicht wurden. Es wurde für 25 min bei 85 °C getrocknet und dann wurde in Abhängigkeit der Beispiele der Basislack aufgetragen.
Basislack: Wörwag Basislack Iridiumsilber DAG T4, im Kreuzgang wurden mit der Pistole so gespritzt, dass die Schichtdicke von 15 µm erreicht wurden. Es wurde für 20 min bei 75 °C getrocknet und dann wurde der Klarlack aufgetragen.
Klarlack: Wörwag Hochglanzklarlack 11141, im Kreuzgang wurde mit der Pistole so gespritzt, dass die Schichtdicke von 30 µm erreicht wurde. Es wurde für 30 min bei 85 °C getrocknet.

In der Tabelle 1 sind die zu testenden Beispiele mit der unterschiedlichen Aktivierung und den unterschiedlichen Lackaufbauten dargestellt.

**Tabelle 1**

| **Beispiele** | **Aktivierung** | **Primer** | **Basislack** | **Klarlack** |
|---|---|---|---|---|
| 1 | Gasflamme | Wörwag Haftprimer schiefergrau leitfähig | Wörwag Basislack Iridiumsilber DAG T4 | Wörwag Hochglanzklarlack 11141 |
| Vergleichsbeispiel | | | | |
| 2 | Plasma | Wörwag Haftprimer schiefergrau leitfähig | Wörwag Basislack Iridiumsilber DAG T4 | Wörwag Hochglanzklarlack 11141 |
| Vergleichsbeispiel | | | | |
| 3 | Gasflamme | Wörwag Haftprimer schiefergrau leitfähig | Wörwag Basislack Iridiumsilber DAG T4 | Wörwag Hochglanzklarlack 11141 |
| Erfindung | | | | |
| 4 | Plasma | Wörwag Haftprimer schiefergrau leitfähig | Wörwag Basislack Iridiumsilber DAG T4 | Wörwag Hochglanzklarlack 11141 |
| Erfindung | | | | |

| | | | | |
|---|---|---|---|---|
| (Gasflamme = Aktivierung durch Beflammung (s. o.), Plasma = Aktivierung durch Plasmabehandlung (s. o.)) | | | | |

Die beschichteten Platten wurden folgenden Tests unterzogen:
Dampfstrahlprüfung (HDW).

In Anlehnung an DIN 55662 wurde die Dampfstrahlprüfung (HDW) durchgeführt.

Dieser Test dient zur Prüfung der Lackhaftung von decklackierten oder beschichteten Kunststoffaußenteilen und zur Delaminationsprüfung.

Durchführung:
A Probenvorbereitung: plan, Größe > 5 cm x 13 cm (bauteil- und geometrieabhängig), Ausnahmen möglich.
B Beschädigung: Andreaskreuz (in Anlehnung an DIN 55662 1. Ritz > 12 cm, 2. Ritz > 5 cm).
C Positionierung: starr, deckend über einen Ritz, Strahlzentrum über Schnittpunkt des Andreaskreuz,
   Positionierung Probekörper und Dampfstrahllanze wurden während gesamter Prüfung fixiert
D Prüfung: Probekörper wurde mit vorgegebenen Prüfparametern (Volumenstrom, Temperatur, Strahllänge und -breite, DIN 55662) belastet.
E Auswertung: visuelle Begutachtung unter Vergleich mit Standardbildern.
F Bewertung: Auswertung erfolgte mittels Vergleich mit Standardbildern der DIN 55662.

### Prüfparameter

Prüfparameter nach DIN 55662 Verfahren B.

Der Gerätedruck wurde mit der vorgeschriebenen Düse so geregelt werden, dass der vorgegebene Volumenstrom eingehalten wurde. Auf eine Angabe des Prüfdrucks wurde bewusst verzichtet, da dieser über den Volumenstrom und die Prüfdüse definiert ist.

Schnittgerät: Für alle Werkstoffe Ritzstichel nach Sikkens, Klinge 1 mm.

Hersteller: Fa. Erichsen oder Fa. mtv Messtechnik.

Prüfdüse: wurde gemäß DBL 5416 verwendet.
Hersteller: Spraying Systems GmbH
Paul-Strähle-Straße10
73614 Schorndorf
Tel. 07181/40970
Bezeichnung: PowerWashJet
Bestellnummer: ¼ PMEG-2506
Beruhigungsstrecke: linear, min. 30 cm vor Düse
Strahlbild: siehe DIN 55662
Strahlkraftverteilung: trapezförmig, keine Druckspitzen
Dampfstrahlprüfung nach Temperaturwechseltest (HDW nach TWT)
Die Prüfdauer waren 3 Zyklen. Jeder Zyklus bestand aus 15 h 105 °C; 30 min. 23 ± 2 °C;
8 h - 40 °C; 30 min. 23 ± 2 °C, anschließend erfolgte die oben beschriebene Dampfstrahlprüfung.

| | |
|---|---|
| Kennwert 0/0 | Haftung sehr gut |
| Kennwert 1/1 und 2/1 | Haftung gut |
| Kennwert 3/1 | Haftung schlecht. |

### Gitterschnitttest mit Klebebandabrissprüfung (GT)

In Anlehnung an DIN EN ISO 2409 wurde ein Gitterschnitt mit Klebebandabrissprüfung (GT) durchgeführt.

Die zu beurteilende Fläche wurde vor dem Anbringen des Gitterschnitts mit Isopropanol gereinigt und ca. 15 Min. bei 23 ± 2 °C getrocknet. Der Gitterschnitt wurde mit einem Mehrschneidengerät, Schneidenabstand 1,5 mm (unabhängig der Beschichtungsdicken) rechtwinklig, ausgeführt. Die Schnitttiefe lag bis in das Substrat.

Für den Gitterschnitttest mit Klebebandabrissprüfung wurde das 19 mm breite Tesaband Typ 4657 grau, der Fa. Beiersdorf Hamburg, verwendet. Vor dem Aufbringen des Tesabandes wurde darauf geachtet, dass die bis in das Substrat reichenden Ritzspuren mit einer Bürste und einem zusätzlich geeigneten Gegenstand, z.B. Fingernagel geglättet wurden. Es wurde gewährleistet, dass das Tesaband vollflächig auf der Lackierung anlag, von Hand fest angedrückt wurde, sowie mit dem Fingernagel fest in die Ritzspuren eingedrückt wurde und ruckartig, mit hoher Geschwindigkeit, senkrecht nach oben abgerissen wurde. Beim Gitterschnitttest wurde das Tesaband entsprechend den Ritzspuren in Längs- und Querrichtung aufgeklebt und abgerissen.

Ging der Haftungsprüfung eine Klima-, Heißwasser- oder sonstige Prüfung voraus, wurde eine Regenerationszeit von 24 h bei 23 ± 2 °C eingehalten.

Die Ergebnisse der Dampfstrahlprüfung, der Dampfstrahlprüfung nach Temperaturwechseltest und des Gitterschnitttests mit Klebebandabrissprüfung sind in der Tabelle 3 zusammengefasst.

Die Beurteilung erfolgt wie folgt:
HDW = Dampfstrahlprüfung
Gesamtergebnis in %.
HDW nach TWT = Dampfstrahlprüfung nach Temperaturwechselprüfung
Gesamtergebnis in %.
GT = Gitterschnitttest
Benotung 0 - 5 (0 gut - 5 schlecht).

**Tabelle 2 Prüfergebnisse**

| **Beispiel** | **Aktivi.** | **Primer** | **Basislack** | **Klarlack** | **HDW** | **HDW nach TWT** | **GT** |
|---|---|---|---|---|---|---|---|
| 1 Vgl. | Gasflamme | Wörwag Haftprimer schiefergrau leitfähig | Wörwag Basislack Iridiumsilber DAG T4 | Wörwag Hochglanzklarlack 11141 | 20 | 30 | 2 |
| 2 Vgl. | Plasma | Wörwag Haftprimer schiefergrau leitfähig | Wörwag Basislack Iridiumsilber DAG T4 | Wörwag Hochglanzklarlack 11141 | 30 | 40 | 3 |
| 3 | Gasflamme | Wörwag Haftprimer schiefergrau leitfähig | Wörwag Basislack Iridiumsilber DAG T4 | Wörwag Hochglanzklarlack 11141 | 0 | 0 | 0 |
| Erfindung | | | | | | | |
| 4 | Plasma | Wörwag Haftprimer schiefergrau leitfähig | Wörwag Basislack Iridiumsilber DAG T4 | Wörwag Hochglanzklarlack 11141 | 5 | 10 | 1 |
| Erfindung | | | | | | | |

Aus den Prüfergebnissen gemäß Tabelle 2 geht hervor, dass die erfindungsgemäße thermoplastische Zusammensetzung eine deutliche Verbesserung der Haftung von Beschichtungsmitteln auf der Oberfläche von aus dieser hergestellten Platten bewirkt.

Diese Verbesserung ist signifikant.

Weitere wichtige Merkmale und Vorteile der Erfindung ergeben sich aus den Unteransprüchen, aus der Figur und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Figur dargestellt und wird in der nachfolgenden Beschreibung näher erläutert.

Hierzu zeigt:

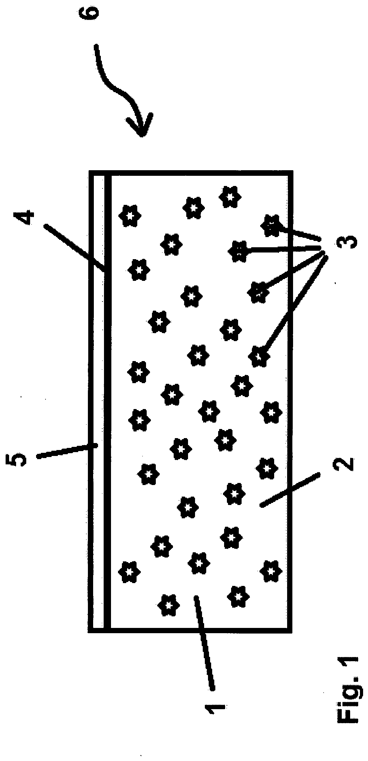

- Fig. 1:: eine schematische Querschnittsansicht eines erfindungsgemäßen Artikels, der an einer Oberfläche beschichtet ist.

In der Fig. 1 ist ein Artikel 6 in einer schematischen Querschnittsansicht gezeigt, der aus der thermoplastischen Zusammensetzung 1 gebildet ist.

Der Artikel 6 weist einen etwa rechteckigen Querschnitt auf.

Die thermoplastische Zusammensetzung enthält als Matrix ein Polyolefin 2, im vorliegenden Fall ein Polypropylen.

In dem Polyolefin 2 ist die Elastomer-Komponente 3 homogen verteilt. Die Elastomer-Komponente 3 ist ausgewählt aus einem Polyolefin-1-alpha-Olefin-Copolymer mit zwei bis acht Kohlenstoffatomen im Polyolefin-Teil, sie weist zumindest teilweise eine Blockstruktur auf.

Die homogene Verteilung der Elastomer-Komponente 3 ist in der thermoplastischen Zusammensetzung 1 derart, dass die Konzentration der Elastomer-Komponente 3 in der thermoplastischen Zusammensetzung 1 an allen Stellen gleich groß oder etwa gleich groß ist.

Der Artikel 6 weist eine Oberfläche 4 auf, die den Artikel 6 begrenzt.

An der Oberfläche 4 des Artikels 6 ist eine Lackschicht 5 aufgebracht. Eine solche Lackschicht 5 kann einschichtig oder mehrschichtig ausgebildet sein. In lediglich schematischer Weise ist in der Fig. 1 eine einschichtige Lackschicht 5 auf der Oberfläche 4 des Artikels 6 dargestellt.

Die Haftung der Lackschicht 5 auf der Oberfläche 4 des Artikels 6 aus der thermoplastischen Zusammensetzung 1 gemäß vorliegender Erfindung ist im Vergleich zum Stand der Technik verbessert, insbesondere was Lackhaftungsprüfungen angeht, und ganz besonders solchen, die in Verbindung mit sog. Dampfstrahltests, Temperaturwechseltests und Wärme- / Kältelagerungen erfolgen.

### Bezugszeichenliste

- 1: thermoplastische Zusammensetzung
- 2: Polyolefin
- 3: Elastomerkomponente
- 4: Oberfläche
- 5: Lackschicht
- 6: Artikel

## Patentansprüche

1. Thermoplastische Zusammensetzung (1), enthaltend mindestens ein Polyolefin (2), das aus Homopolymeren des Polypropylens ausgewählt ist, und mindestens eine Elastomerkomponente (3), wobei die Elastomerkomponente (3) ausgewählt ist aus einem Polyolefin-1-alpha-Olefin-Copolymer auf Basis von Polyethylen oder von Polypropylen, mit zwei bis acht Kohlenstoffatomen im 1-alpha-Olefinteil, das zumindest teilweise eine Blockstruktur aufweist, wobei das Polyolefin-1-alpha-Olefin-Copolymer eine Dichte nach DIN ISO 53479 von 0,85 bis 0,91, und einen Schmelzindex nach DIN EN ISO 1133 von 0,2 bis 30 g/10min bei 2.16 kg / 190 °C aufweist,
**dadurch gekennzeichnet, dass**
das Polyolefin-1-alpha-Olefin-Copolymer in einer Menge von 5 bis 15 Gew.-% enthalten ist.

2. Thermoplastische Zusammensetzung (1) nach Anspruch 1, **dadurch gekennzeichnet, dass** das Polyolefin-1-alpha-Olefin-Copolymer einen Schmelzpunkt nach DIN 53765 von 50 bis 130 °C, insbesondere von 80 bis 120 °C aufweist.

3. Thermoplastische Zusammensetzung (1) nach einem der Ansprüche 1 oder 2,
**dadurch gekennzeichnet, dass** das Polyolefin-1-alpha-Olefin-Copolymer eine Mooney Viskosität nach ASTM D1646 von 2 bis 70 aufweist.

4. Thermoplastische Zusammensetzung (1) nach einem der vorangehenden Ansprüche, **dadurch gekennzeichnet, dass** das Polyolefin-1-alpha-Olefin-Copolymer homogen in der thermoplastischen Zusammensetzung (1) verteilt ist.

5. Thermoplastische Zusammensetzung (1) nach einem der vorangehenden Ansprüche, **dadurch gekennzeichnet, dass** das Polyolefin-1-alpha-Olefin-Copolymer abgemischt ist mit einem HDPE (High Density Polyethylen).

6. Thermoplastische Zusammensetzung (1) nach einem der vorangehenden Ansprüche, **dadurch gekennzeichnet, dass** diese weitere Komponenten enthält, ausgewählt aus Stabilisatoren, Gleitmitteln, Pigmenten, Füllstoffen, Nukleierungsmitteln, Antistatika, Haftungsverbesserer, Leitfähigkeitsadditiven, Schaumbildungsmitteln, Gasen, Impaktmodifikatoren und Oberflächenspannungsmodifikatoren.

7. Thermoplastische Zusammensetzung (1) nach Anspruch 6, **dadurch gekennzeichnet, dass** der Füllstoff ausgewählt ist aus einem Standard-Talkum oder einem High Aspect Ratio Talkum mit einer BET Oberfläche von 8 bis 50 m2/g nach IS 9277.

8. Artikel (6), der eine thermoplastische Zusammensetzung (1) nach einem der Ansprüche 1 bis 8 enthält oder aus einer solchen besteht.

9. Artikel (6) nach Anspruch 8 in Form eines Automobilbauteils, insbesondere eines Automobilaußenanbauteils, wie beispielsweise einer Stoßfängerverkleidung, eines Kühlergitters, eines Spoilers, einer Schwellerverkleidung, eines Kotflügels, einer Heccklappe, einer Tür, eines Deckels, eines Tankdeckels, einer Verschlussanordnung, einer Abdeckung, einer Leiste oder dergleichen.

10. Artikel (6) nach Anspruch 8 oder 9, der zumindest abschnittsweise an seiner Oberfläche (4) beschichtet, beklebt, lackiert oder anderweitig dekoriert oder funktionalisiert ist.

## Claims

1. Thermoplastic composition (1), containing at least one polyolefin (2), which is selected from polypropylene homopolymers, and at least one elastomer component (3), wherein the elastomer component (3) is selected from a polyolefin-1-alpha-olefin copolymer based on polyethylene or polypropylene, with two to eight carbon atoms in the 1-alpha-olefin moiety, which has at least partially a block structure, wherein the polyolefin-1-alpha-olefin copolymer has a density according to DIN ISO 53479 of 0.85 to 0.91, and a melt index according to DIN EN ISO 1133 of 0.2 to 30 g/10 min at 2.16 kg/190 °C,
**characterized in that**
the polyolefin-1-alpha-olefin copolymer is contained in an amount of 5 to 15% by weight.

2. Thermoplastic composition (1) according to claim 1, **characterized in that** the polyolefin-1-alpha-olefin copolymer has a melting point according to DIN 53765 of 50 to 130°C, in particular 80 to 120°C.

3. Thermoplastic composition (1) according to any one of claims 1 or 2, **characterized in that** the polyolefin-1-alpha-olefin copolymer has a Mooney viscosity according to ASTM D1646 of 2 to 70.

4. Thermoplastic composition (1) according to any one of the preceding claims, **characterized in that** the polyolefin-1-alpha-olefin copolymer is homogeneously distributed in the thermoplastic composition (1).

5. Thermoplastic composition (1) according to any one of the preceding claims, **characterized in that** the polyolefin-1-alpha-olefin copolymer is blended with HDPE (high-density polyethylene).

6. Thermoplastic composition (1) according to any one of the preceding claims, **characterized in that** it contains further components selected from stabilizers, lubricants, pigments, fillers, nucleating agents, antistatic agents, adhesion improvers, conductivity additives, foaming agents, gases, impact modifiers and surface tension modifiers.

7. Thermoplastic composition (1) according to claim 6, **characterized in that** the filler is chosen from a standard talc or a high aspect ratio talc having a BET surface area of 8 to 50 m²/g according to IS 9277.

8. Article (6), which contains or consists of a thermoplastic composition (1) according to any one of claims 1 to 8.

9. Article (6) as claimed in claim 8, in the form of an automotive part, in particular an exterior automotive attachment component, such as a bumper trim, grille, spoiler, rocker panel trim, fender, tailgate, door, cover, tank cover, closure arrangement, cover, trim strip or the like.

10. Article (6) according to claim 8 or 9, which is coated, bonded, painted or otherwise decorated or functionalized at least in sections on its surface (4).

## Revendications

1. Composition thermoplastique (1), contenant au moins une polyoléfine (2), qui est choisie parmi les homopolymères du polypropylène, et au moins un composant élastomère (3), le composant élastomère (3) étant choisi parmi un copolymère de polyoléfine-1-alpha-oléfine à base de polyéthylène ou de polypropylène, avec deux à huit atomes de carbone dans la partie 1-alpha-oléfine, qui présente au moins partiellement une structure séquencée, le copolymère de polyoléfine-1-alpha-oléfine présentant une densité selon DIN ISO 53479 de 0,85 à 0,91, et un indice de fusion selon DIN EN ISO 1133 de 0,2 à 30 g/10 min à 2,16 kg/190 °C,
**caractérisée en ce que**
le copolymère de polyoléfine-1-alpha-oléfine est contenu en une quantité de 5 à 15 % en poids.

2. Composition thermoplastique (1) selon la revendication 1, **caractérisée en ce que** le copolymère de polyoléfine-1-alpha-oléfine présente un point de fusion selon la norme DIN 53765 de 50 à 130 °C, notamment de 80 à 120 °C.

3. Composition thermoplastique (1) selon l'une quelconque des revendications 1 ou 2, **caractérisée en ce que** le copolymère de polyoléfine-1-alpha-oléfine présente une viscosité Mooney selon ASTM D1646 de 2 à 70.

4. Composition thermoplastique (1) selon l'une quelconque des revendications précédentes, **caractérisée en ce que** le copolymère de polyoléfine-1-alpha-oléfine est réparti de manière homogène dans la composition thermoplastique (1).

5. Composition thermoplastique (1) selon l'une quelconque des revendications précédentes, **caractérisée en ce que** le copolymère de polyoléfine-1-alpha-oléfine est mélangé avec PEHD (polyéthylène haute densité).

6. Composition thermoplastique (1) selon l'une quelconque des revendications précédentes, **caractérisée en ce que** celle-ci contient d'autres composants choisis parmi les stabilisants, les lubrifiants, les pigments, les charges, les agents de nucléation, les agents antistatiques, les agents améliorant l'adhérence, les additifs de conductivité, les agents moussants, les gaz, les modificateurs d'impact et les modificateurs de tension superficielle.

7. Composition thermoplastique (1) selon la revendication 6, **caractérisée en ce que** la charge est choisie parmi un talc standard ou un talc à haut rapport d'aspect ayant une surface BET de 8 à 50 m²/g selon IS 9277.

8. Article (6), qui contient une composition thermoplastique (1) selon l'une quelconque des revendications 1 à 8 ou en est constitué.

9. Article (6) selon la revendication 8, sous la forme d'une pièce automobile, notamment d'une pièce rapportée extérieure automobile, telle que par exemple une garniture de pare-chocs, une grille de refroidissement, un déflecteur, une garniture de bas de caisse, une aile, un hayon, une porte, un couvercle, un couvercle de réservoir, un agencement de fermeture, un recouvrement, une baguette ou similaire.

10. Article (6) selon la revendication 8 ou 9, qui est revêtu, collé, peint ou autrement décoré ou fonctionnalisé au moins par sections sur sa surface (4).
